# EUROPÄISCHE PATENTANMELDUNG

(11) **EP 3 716 519 A1**
(43) Veröffentlichungstag der Anmeldung: **30.09.2020**
(21) Anmeldenummer: 19166161.0
(22) Anmeldetag: 29.03.2019
(51) Int. Cl.: H04L 5/00, H04L 12/841

(54) **VERFAHREN ZUR ÜBERMITTLUNG ZEITKRITISCHER DATEN INNERHALB EINES KOMMUNIKATIONSNETZES UND KOMMUNIKATIONSGERÄT**

(71) Anmelder: Siemens Aktiengesellschaft, 80333 München (DE)
(72) Erfinder: Meisinger, Andreas, 92287 Schmidmühlen (DE)

(57) **Zusammenfassung**

Zur Übermittlung zeitkritischer Daten innerhalb eines Kommunikationsnetzes werden ausgewählte Datagramme Datenströmen zugeordnet und über den Datenströmen zugeordnete Pfade übermittelt. Weiterleitende Kommunikationsgeräte überprüfen bei einer Reservierungsanfrage für einen Datenstrom jeweils, ob im jeweiligen Kommunikationsgerät ausreichende Ressourcen zur Datenübermittlung unter Einhaltung spezifizierter Dienstgüteparameter verfügbar sind. Die weiterleitenden Kommunikationsgeräte ermitteln hierzu zu erwartenden Latenzen jeweils anhand von Latenz-Erwartungswerten von entlang der Pfade vorhergehenden weiterleitenden Kommunikationsgeräten. Bei Einhaltung der maximalen Latenzen wird jeweils eine Latenz-Bestätigung an die vorhergehenden weiterleitenden Kommunikationsgeräte übermittelt. Die weiterleitenden Kommunikationsgeräte reservieren jeweils nur dann die Ressourcen für die Übertragung der Datenströme, wenn in jedem weiterleitenden Kommunikationsgerät entlang des jeweiligen Pfades eine Latenz-Bestätigung vorliegt.

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

Eine priorisierte Übermittlung von Datenrahmen ist beispielsweise auf Grundlage von virtuellen lokalen Netzen bzw. Virtual Local Area Networks (VLAN) entsprechend Standard IEEE 802.1Q grundsätzlich mittels entsprechender in Datenrahmen eingefügter Tags möglich. Zur synchronisierten und priorisierten Übertragung von Audio- und Videodatenströmen (Audio/Video Bridging) über Kommunikationsnetze ist eine Bandbreitenreservierung für einzelne Kommunikationsverbindungen vorgesehen, denen eine höchste Priorität zugeordnet ist. Für eine Übertragung von Audio- und Videodatenströmen benötigte Ressourcen werden dabei in Kommunikationsgeräten wie Switches reserviert. Eine Weiterleitung hochpriorisierter Datenrahmen erfolgt jedoch erst nach einer erfolgreichen Reservierung. Im Rahmen einer Bandbreitenüberwachung wird sichergestellt, dass hinsichtlich tatsächlich genutzter Bandbreite ausreichend reservierte Bandbreite vorliegt. Eine Kommunikationsverbindung, die mehr Bandbreite nutzt als reserviert ist, würde ansonsten zu einer Störung eines gesamten Kommunikationsnetzes führen, im ungünstigsten Fall zu dessen Stillstand aufgrund Überlastung.

Für die gesicherte Übertragung von Audio- und Videodatenströmen über Ethernet-basierte Kommunikationsnetze sind entsprechend Standard IEEE 802.1 Qav sind Credit-based Shaper (CBS) als Maß für eine Bandbreitenüberwachung definiert worden. Durch Credit-based Shaper wird nach jedem übertragenen Datenrahmen eine Übertragungspause definiert, um eine Bandbreitenbegrenzung in Bezug auf eine reservierte Bandbreite sicherzustellen. Derartige Zwangspausen sind jedoch in industriellen Automatisierungssystemen bei einer Übertragung von vielen Datenrahmen mit geringem Nutzdateninhalt für Steuerungsdaten, die eher als Datenbündel bzw. Bursts anzusehen sind, äußerst problematisch.

Entsprechend EP 3 038 325 A1 werden zur Datenübermittlung in einem Kommunikationsnetz eines industriellen Automatisierungssystems erste Datenrahmen, die Steuerungsdaten für das Automatisierungssystem umfassen, durch Koppel-Kommunikationsgeräte des Kommunikationsnetzes nur innerhalb periodischer erster Zeitintervalle übermittelt. Zweite Datenrahmen, die Sequenzen von Datenrahmen umfassenden Datenströmen zugeordnet sind, bzw. dritte Datenrahmen, für deren Übermittlung keine oder eine unter einem vorgegebenen Schwellwert liegende Dienstgüte festgelegt ist, werden innerhalb periodischer zweiter Zeitintervalle übermittelt. Die ersten Zeitintervalle sind in erste und zweite Teilintervall unterteilt. Weiterzuleitende erste Datenrahmen werden Teilintervall-alternierend in eine erste bzw. zweite Warteschlange eingefügt und alternierend aus den Warteschlangen für eine Weiterleitung entnommen.

In der älteren internationalen Patentanmeldung PCT/EP2017/ 066175 ist ein Verfahren zur Datenübermittlung beschrieben, das eine Kombination von geschützter Kommunikation und geringem Netzwerk-Konfigurationsaufwand ermöglicht. Dabei werden bei einer Reservierung von Ressourcen zur Übermittlung von Datenströmen (Streams) von einem Sender zu einem Empfänger zumindest zwei zumindest abschnittsweise redundante Pfade reserviert. Durch Erweiterung eines Reservierungsprotokolls wird eine automatische Konfiguration von Duplikatefiltern an redundanten Pfadabschnitten zugeordneten Netzknoten während einer Ressoucenreservierung vorgenommen.

Entsprechend der älteren europäischen Patentanmeldung mit dem Anmeldeaktenzeichen 18191982.0 werden zur Simulation einer Verarbeitung von Reservierungsanfragen für Multicast-Datenströme in Kommunikationsnetzen hinsichtlich ihres Verhaltens zu simulierende Kommunikationsgeräte jeweils funktional in eine als Control Plane bezeichnete Kommunikationssteuerungsebene sowie in eine als Data Plane bezeichnete Datenübermittlungsebene unterteilt. Für der Control Plane zugeordnete Funktionen der Kommunikationsgeräte werden jeweils Simulationssystem-Komponenten bereitgestellt, die durch in einer Ablaufsteuerungsumgebung ausführbare Software-Container gebildet werden. Netzinfrastrukturgeräte werden auf der Data Plane durch mittels der Netzinfrastrukturgeräte jeweils bereitgestellte Ressourcen modelliert. Die den Kommunikationsgeräten zugeordneten Software-Container werden entsprechend einer vorgegebenen Topologie selektiv in der Ablaufsteuerungsumgebung ausgeführt und dort miteinander gekoppelt.

In Kommunikationsnetzen zur Übermittlung zeitkritischer Daten, insbesondere Time-Sensitive Networks, werden beispielsweise auf Basis von Time-Aware gemäß IEEE 802.1Qbv Latenzgarantien für Datenstöme (Streams) entweder statisch als Netz- bzw. Klasseneigenschaft festgelegt oder durch eine zentrale Instanz geprüft. Eine Gesamtlatenz eines Datenstroms ist von lokalen Latenzen jeder einzelnen Bridge bzw. jedes einzelnen Switches entlang eines Datenstrom-Pfads abhängig. Die lokalen Latenzen hängen wiederum von allen Datenströmen ab, die sich jeweils einen Port einer Bridge bzw. eines Switches entlang des Datenstrom-Pfads teilen. Entsprechend einem zentralen Stream-Reservierungskonzept sind diese Information in einem Central Network Controller (CNC) verfügbar. Bei einem dezentralen Stream-Reservierungskonzept liegen in jeder Bridge bzw. jedem Switch jedoch nur lokale Informationen und Informationen von direkt benachbarten Netzknoten vor. Dies kann bei einem dezentralen Stream-Reservierungskonzept dazu führen, dass für Bridges bzw. Switches an weiter entfernten Netzknoten von worst case Latenzen ausgegangen werden muss, auch wenn diese tatsächlich nur selten vorliegen. Derartige worst case Annahmen führen üblicherweise zu großen Bandbreitenverlusten.

Der vorliegenden Erfindung liegt die Aufgabe zugrunde, ein Verfahren zum Betrieb eines Kommunikationssystems zur Übermittlung zeitkritischer Daten schaffen, das bei einer Reservierung von Ressourcen für Datenströme eine effiziente Ausschöpfung zur Verfügung stehender Systemressourcen ermöglicht, und eine geeignete Vorrichtung zur Durchführung des Verfahrens anzugeben.

Diese Aufgabe wird erfindungsgemäß durch ein Verfahren mit den in Anspruch 1 angegebenen Merkmalen und durch ein Kommunikationsgerät mit den in Anspruch 14 angegebenen gelöst. Vorteilhafte Weiterbildungen sind in den abhängigen Ansprüchen angegeben.

Entsprechend dem erfindungsgemäßen Verfahren zur Übermittlung zeitkritischer Daten innerhalb eines Kommunikationsnetzes werden ausgewählte Datagramme Datenströmen zugeordnet und von ersten Kommunikationsgeräten an zweite Kommunikationsgeräte über zumindest die ersten und zweiten Kommunikationsgeräte umfassende Pfade übermittelt. Vorzugsweise sind die ersten Kommunikationsgeräte über ein Time-Sensitive Network, insbesondere entsprechend insbesondere entsprechend IEEE 802.1 Q und IEEE 802.1 Qbv, mit den zweiten Kommunikationsgeräten verbunden. Eine Weiterleitung der Datenströme kann mittels Frame Preemption, insbesondere gemäß IEEE 802.1Qbu, Time-Aware Shaper, insbesondere gemäß IEEE 802.1Qbv, Credit-Based Shaper, insbesondere gemäß IEEE 802.1Qav, Burst Limiting Shaper, Peristaltic Shaper bzw. Priority-Based Shaper gesteuert werden.

Zur Reservierung von Ressourcen spezifizieren an die ersten Kommunikationsgeräte angeschlossene Kommunikationsendgeräte, die durch weiterleitende Kommunikationsgeräte entlang der Pfade für eine Übertragung der Datenströme bereitzustellen sind, jeweils maximale Latenzen umfassende Dienstgüteparameter für die Datenströme. Demgegenüber spezifizieren an die zweiten Kommunikationsgeräte angeschlossene Kommunikationsendgeräte für eine Reservierungsanfrage jeweils einen Datenstrom-Identifikator. Zur Pfadermittlung können die weiterleitenden Kommunikationsgeräte untereinander Topologieinformationen, insbesondere entsprechend IS-IS-Protokoll (Intermediate System to Intermediate System), austauschen. Die Reservierungsanfragen werden vorzugsweise entsprechend IEEE 802.1Qcc behandelt. Dabei kann an die ersten Kommunikationsgeräte angeschlossenen Kommunikationsendgeräten jeweils eine Talker-Funktion zugeordnet sein, während an die zweiten Kommunikationsgeräte angeschlossenen Kommunikationsendgeräten beispielsweise jeweils eine Listener-Funktion zugeordnet ist.

Die Dienstgüteparameter bzw. die Reservierungsanfragen werden jeweils durch das jeweilige Kommunikationsendgerät oder durch ein mit diesem verbundenes erstes oder zweites Kommunikationsgerät an die weiterleitenden Kommunikationsgeräte übermittelt. Die weiterleitenden Kommunikationsgeräte überprüfen bei einer Reservierungsanfrage jeweils, ob im jeweiligen Kommunikationsgerät ausreichende Ressourcen zur Datenübermittlung unter Einhaltung der spezifizierten Dienstgüteparameter verfügbar sind. Die durch die Kommunikationsgeräte bereitzustellenden Ressourcen umfassen beispielsweise nutzbare Übertragungszeitfenster, Bandbreite, zugesicherte maximale Latenz, Queue-Anzahl, Queue-Cache bzw. Adress-Cache in Switches oder Bridges.

Erfindungsgemäß ermitteln die weiterleitenden Kommunikationsgeräte zur Überprüfung einer Verfügbarkeit ausreichender Ressourcen jeweils für Anschlüsse, die zur Ausleitung der Datenströme vorgesehen sind, zu erwartende Latenzen und übermitteln diese als Latenz-Erwartungswert entlang der Pfade an nachfolgende weiterleitende Kommunikationsgeräte. Dabei ermitteln die weiterleitenden Kommunikationsgeräte die zu erwartenden Latenzen jeweils anhand der Latenz-Erwartungswerte von entlang der Pfade vorhergehenden weiterleitenden Kommunikationsgeräten und übermitteln bei Einhaltung der maximalen Latenzen eine Latenz-Bestätigung an die vorhergehenden weiterleitenden Kommunikationsgeräte. Die weiterleitenden Kommunikationsgeräte reservieren jeweils nur dann die Ressourcen für die Übertragung der Datenströme, wenn in jedem weiterleitenden Kommunikationsgerät entlang des jeweiligen Pfades eine Latenz-Bestätigung vorliegt.

Mit der vorliegenden Erfindung kann für eine dezentrales Stream-Reservierungsmodell eine genaue Latenzermittlung realisiert werden, indem hinsichtlich eines Ports, über den Streams ausgeleitet werden, Interferenzen zu Streams auf anderen Ports ermittelt und dadurch bedingte Latenzen an in Stream-Richtung nachfolgende Bridges übermittelt werden. Auf diese Weise können Ressourcen bei Stream-Reservierungen bedarfsgerecht allokiert werden und unterliegen keinen unnötig hohen worst case Annahmen für Latenzen in nachfolgenden Bridges. Insbesondere kann die vorliegende Erfindung mittels einer entsprechenden MSRP-Erweiterung (Multiple Stream Reservation Protocol) realisiert werden.

Vorzugsweise ermitteln die weiterleitenden Kommunikationsgeräte zur Überprüfung der Verfügbarkeit ausreichender Ressourcen die zu erwartenden Latenzen einschließlich Latenzen, die durch andere Datenströme, die jeweils am selben Anschluss ausgeleitet werden, hervorgerufen werden. Insbesondere erfolgt bei Topologieänderungen bzw. neuen Reservierungsanfragen eine erneute Ermittlung der zu erwartenden Latenzen. Bei Überschreitung der maximalen Latenzen werden beispielsweise bisherige Latenz-Bestätigungen widerrufen oder Warnungen signalisiert. Vorteilhafterweise ermitteln die weiterleitenden Kommunikationsgeräte bei Topologieänderungen neue Pfade für die Datenströme. Somit ist auch bei neuen Reservierungsanfragen bzw. bei Topologieänderungen eine bedarfsgerechte Allokierung von Ressourcen für Stream-Reservierungen sichergestellt.

Entsprechend einer vorteilhaften Ausgestaltung der vorliegenden Erfindung werden die Datenströme auf Reservierungsanfragen jeweils bidirektional eingerichtet. Darüber hinaus wird bei ausreichenden Ressourcen vorzugsweise jeweils eine dem spezifizierten Datenstrom-Identifikator zugeordnete Multicast-Adresse an ein anfragendes Kommunikationsendgerät oder an ein mit diesem verbundenes zweites Kommunikationsgerät übermittelt. Die an die ersten Kommunikationsgeräte angeschlossenen Kommunikationsendgeräte können die Dienstgüteparameter für die Datenströme beispielsweise jeweils mittels einer Talker Advertise-Nachricht spezifizieren, während die an die zweiten Kommunikationsgeräte angeschlossenen Kommunikationsendgeräte die Datenstrom-Identifikatoren jeweils mittels einer Listener Ready-Nachricht spezifizieren können.

Das erfindungsgemäße Kommunikationsgerät ist zur Durchführung eines Verfahrens entsprechend vorangehenden Ausführungen vorgesehen und umfasst mehrere Anschlüsse zur Verbindung mit weiteren Kommunikationsgeräten sowie ein Koppelelement, durch das die Anschlüsse schaltbar miteinander verbindbar sind. Das Kommunikationsgerät ist dafür ausgestaltet und eingerichtet, ausgewählte Datagramme Datenströmen zuzuordnen und von ersten Kommunikationsgeräten an zweite Kommunikationsgeräte über zumindest die ersten und zweiten Kommunikationsgeräte umfassende Pfade zu übermitteln. Außerdem ist das Kommunikationsgerät dafür ausgestaltet und eingerichtet, durch an die ersten Kommunikationsgeräte angeschlossene Kommunikationsendgeräte zur Reservierung von Ressourcen für die Datenströme spezifizierte Dienstgüteparameter, die jeweils maximale Latenzen umfassen, bzw. durch an die zweiten Kommunikationsgeräte angeschlossene Kommunikationsendgeräte für Reservierungsanfragen spezifizierte Datenstrom-Identifikatoren an weiterleitende Kommunikationsgeräte entlang der Pfade für die Datenströme zu übermitteln. Des Weiteren ist das Kommunikationsgerät dafür ausgestaltet und eingerichtet, zu überprüfen, ob im Kommunikationsgerät ausreichende Ressourcen zur Datenübermittlung unter Einhaltung der spezifizierten Dienstgüteparameter verfügbar sind.

Erfindungsgemäß ist das Kommunikationsgerät dafür ausgestaltet und eingerichtet, zur Überprüfung einer Verfügbarkeit ausreichender Ressourcen jeweils für Anschlüsse, die zur Ausleitung der Datenströme vorgesehen sind, zu erwartende Latenzen zu ermitteln und als Latenz-Erwartungswert entlang der Pfade an nachfolgende weiterleitende Kommunikationsgeräte zu übermitteln. Außerdem ist das Kommunikationsgerät dafür ausgestaltet und eingerichtet, die zu erwartenden Latenzen jeweils anhand der Latenz-Erwartungswerte von entlang der Pfade vorhergehenden weiterleitenden Kommunikationsgeräten zu ermitteln und bei Einhaltung der maximalen Latenzen eine Latenz-Bestätigung an die vorhergehenden weiterleitenden Kommunikationsgeräte zu übermitteln und nur dann die Ressourcen für die Übertragung der Datenströme zu reservieren, wenn in jedem weiterleitenden Kommunikationsgerät entlang des jeweiligen Pfades eine Latenz-Bestätigung vorliegt.

Die vorliegende Erfindung wird nachfolgend an einem Ausführungsbeispiel anhand der Zeichnung näher erläutert. Es zeigt
- Figur 1: ein mehrere Kommunikationsgeräte umfassendes Kommunikationsnetz für ein industrielles Automatisierungssystem,
- Figur 2: ein Ablaufdiagramm zur Reservierung von Ressourcen für Datenströme innerhalb des Kommunikationsnetzes gemäß Figur 1.

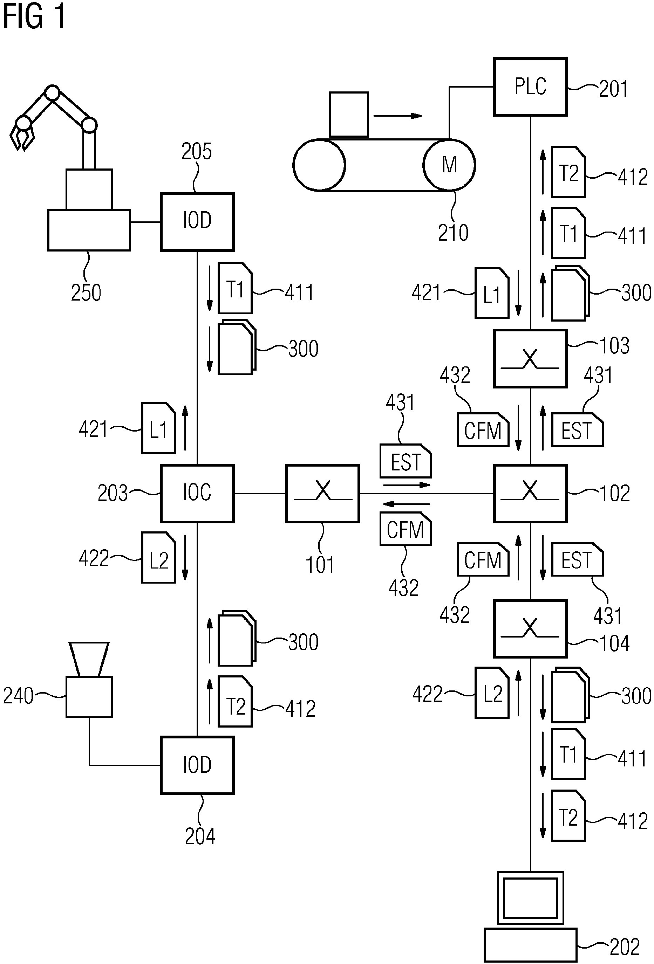

Das in Figur 1 dargestellte Kommunikationsnetz für ein industrielles Automatisierungssystem umfasst mehrere Bridges oder Switches 101-104 als Datagramme weiterleitende Kommunikationsgeräte. Bridges bzw. Switches 101-104 umfassen jeweils mehrere Ports sowie einen Backplane-Switch als Koppelelement und dienen insbesondere zum Anschluss von speicherprogrammierbaren Steuerungen 201, Bedien- und Beobachtungsstationen 202, I/O-Controllern 203 oder I/O-Modulen 204-205, die ebenfalls Kommunikationsgeräte bzw. Kommunikationsendgeräte darstellen.

Im vorliegenden Ausführungsbeispiel ist das Kommunikationsnetz als Time-Sensitive Network ausgestaltet, insbesondere entsprechend IEEE 802.1Q, IEEE 802.1AB, IEEE 802.1AS, IEEE 802.1BA bzw. IEEE 802.1CB. Eine Weiterleitung von Datenrahmen (Frames) im Kommunikationsnetz kann vorteilhafterweise mittels Frame Preemption, insbesondere gemäß IEEE 802.1Qbu, Time-Aware Shaper, insbesondere gemäß IEEE 802.1Qbv, Credit-Based Shaper, insbesondere gemäß IEEE 802.1Qav, Burst Limiting Shaper, Peristaltic Shaper bzw. Priority-Based Shaper gesteuert werden. Darüber hinaus sind vorzugsweise für jeden Port eines sendenden bzw. weiterleitenden Kommunikationsgeräts 101-104, 201-205 mehrere Sendewarteschlangen (Queues) vorgesehen.

Speicherprogrammierbare Steuerungen 201 umfassen typischerweise jeweils ein Kommunikationsmodul, eine Zentraleinheit sowie zumindest eine Eingabe/Ausgabe-Einheit dar. Eingabe/ Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul kann eine speicherprogrammierbare Steuerung 201 mit einem Switch oder Router oder zusätzlich mit einem Feldbus verbunden werden. Die Eingabe/Ausgabe-Einheit dient einem Austausch von Steuerungs- und Messgrößen zwischen der speicherprogrammierbaren Steuerung 201 und einer durch die speicherprogrammierbare Steuerung 201 gesteuerten Maschine oder Vorrichtung 210. Die Zentraleinheit ist insbesondere für eine Ermittlung geeigneter Steuerungsgrößen aus erfassten Messgrößen vorgesehen. Obige Komponenten der speicherprogrammierbaren Steuerung 201 sind beispielsweise über ein Rückwandbus-System miteinander verbunden.

Auch die I/O-Module 204-205 sind zum Austausch von Steuerungs- und Messgrößen mit angeschlossenen Maschinen oder Vorrichtungen 240, 250 vorgesehen. Zur Steuerung der I/O-Module 204-205 ist beispielsweise pro Automatisierungszelle ein zugeordneter I/O-Controller 203 vorgesehen. Die I/O-Module 204-205 können grundsätzlich auch durch eine entfernte speicherprogrammierbaren Steuerung 201 angesteuert werden.

Eine Bedien- und Beobachtungsstation 202 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 202 zur Anzeige von Werten eines Regelungskreises und zur Veränderung von Regelungsparametern verwendet. Bedien- und Beobachtungsstationen 202 umfassen zumindest eine graphische Benutzerschnittstelle, ein Eingabegerät, eine Prozessoreinheit und ein Kommunikationsmodul.

Zur Übermittlung zeitkritischer Daten werden ausgewählte Datenrahmen (Frames) 300 Datenströmen (Streams) zugeordnet und von ersten Bridges 101 an zweite Bridges 102-103 über zumindest die ersten und zweiten Bridges umfassende Pfade übermittelt. Dabei ist an die ersten Bridges 101 angeschlossenen Kommunikationsend- bzw. Automatisierungsgeräten 204-205 jeweils eine Talker-Funktion zugeordnet, während an die zweiten Kommunikationsgeräte 102-103 angeschlossenen Kommunikationsend- bzw. Automatisierungsgeräten 201-202 jeweils eine Listener-Funktion zugeordnet ist. Im vorliegenden Ausführungsbeispiel ist lediglich eine erste Bridge 101 vorgesehen, an welche die I/O-Module 204-205 über den I/O-Controller 203 angeschlossen sind. Grundsätzlich wäre es auch möglich, dass lediglich eine zweite Bridge vorgesehen ist, an welche ein oder mehrere Kommunikationsend- bzw. Automatisierungsgeräte direkt oder mittelbar angeschlossen sind.

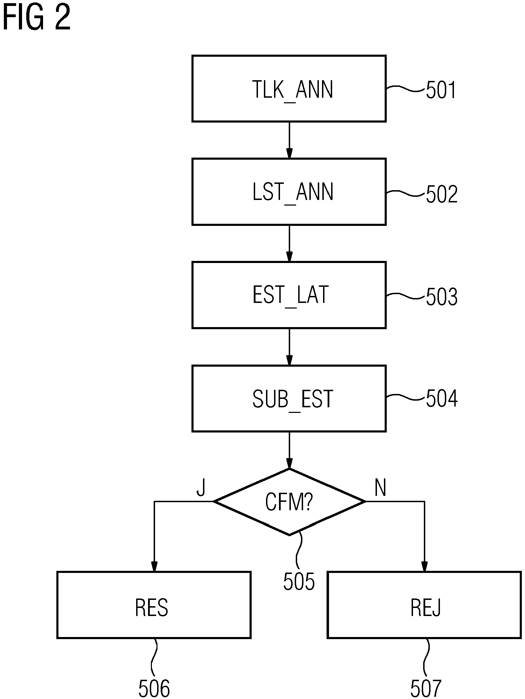

Entsprechend Schritt 501 des in Figur 2 dargestellten Ablaufdiagramms spezifizieren die an die ersten Bridges 101 angeschlossenen Kommunikationsend- bzw. Automatisierungsgeräte 204-205 zur Reservierung von Ressourcen, die durch weiterleitende Kommunikationsgeräte 102-104 entlang der Pfade für eine Übertragung der Datenströme bereitzustellen sind, jeweils maximale Latenzen umfassende Dienstgüteparameter für die Datenströme. Im vorliegenden Ausführungsbeispiel spezifizieren die I/O-Module 204-205, die Kommunikationsendgeräte mit Talker-Funktion darstellen, die Dienstgüteparameter für die Datenströme jeweils mittels einer Talker Advertise-Nachricht 411-412.

Demgegenüber spezifizieren die an die zweiten Bridges 103-104 angeschlossenen Kommunikationsend- bzw. Automatisierungsgeräte 201-202 für eine Reservierungsanfrage entsprechend Schritt 502 jeweils einen Datenstrom-Identifikator. Im vorliegenden Ausführungsbeispiel spezifizieren die speicherprogrammierbare Steuerungen 201 und die Bedien- und Beobachtungsstation 202, die Kommunikationsendgeräte mit Listener-Funktion darstellen, die Datenstrom-Identifikatoren jeweils mittels einer Listener Ready-Nachricht 421-422. Darüber hinaus werden die Reservierungsanfragen vorzugsweise entsprechend IEEE 802.1Qcc behandelt. Insbesondere wird bei ausreichenden Ressourcen jeweils eine dem spezifizierten Datenstrom-Identifikator zugeordnete Multicast-Adresse an ein anfragendes Kommunikationsendgerät oder an eine mit diesem direkt oder mittelbar verbundene zweite Bridge 103-104 übermittelt. Vorzugsweise werden die Datenströme auf erfolgreiche Reservierungsanfragen jeweils bidirektional eingerichtet.

Im vorliegenden Ausführungsbeispiel werden sowohl die Talker Advertise-Nachricht 411 des I/O-Moduls 205 als auch die Talker Advertise-Nachricht 412 des I/O-Moduls 204 über den I/O-Controller 203 und die Bridges 101-104 an die speicherprogrammierbare Steuerung 201 und an die Bedien- und Beobachtungsstation 202 übermittelt. Während die Listener Ready-Nachricht 421 der speicherprogrammierbare Steuerung 201 auf ein Abonnieren eines ersten durch das I/O-Modul 205 angebotenen Datenstroms abzielt, ist die Listener Ready-Nachricht 422 der Bedien- und Beobachtungsstation 202 auf ein Abonnieren eines zweiten durch das I/O-Modul 204 angebotenen Datenstroms gerichtet. Die Pfade für diese beiden Datenströme überlappen sich beim I/O-Controller 203 und bei den beiden Bridges 101-102.

Die Dienstgüteparameter bzw. die Reservierungsanfragen werden jeweils durch das jeweilige Kommunikationsend- bzw. Automatisierungsgerät 201-202, 204-204 bzw. durch eine mit diesem direkt oder mittelbar verbundene erste oder zweite Bridge 101, 103-104 sukzessive an die weiterleitenden Kommunikationsgeräte 101-104, 203 übermittelt. Die weiterleitenden Kommunikationsgeräte 101-104, 203 überprüfen bei einer Reservierungsanfrage jeweils, ob im jeweiligen Kommunikationsgerät 101-104, 203 ausreichende Ressourcen zur Datenübermittlung unter Einhaltung der spezifizierten Dienstgüteparameter verfügbar sind. Die durch die Kommunikationsgeräte bereitzustellenden Ressourcen umfassen insbesondere nutzbare Übertragungszeitfenster, Bandbreite, zugesicherte maximale Latenz, Queue-Anzahl, Queue-Cache bzw. Adress-Cache in Switches oder Bridges. Entsprechend Schritt 503 ermitteln die weiterleitenden Kommunikationsgeräte 101-104, 203 zur Überprüfung einer Verfügbarkeit ausreichender Ressourcen jeweils für Anschlüsse, die zur Ausleitung der Datenströme vorgesehen sind, zu erwartende Latenzen und übermitteln diese entsprechend Schritt 504 als Latenz-Erwartungswert 431 stromabwärts (von Talker zu Listener) entlang der Pfade an nachfolgende weiterleitende Kommunikationsgeräte.

Die weiterleitenden Kommunikationsgeräte 101-104, 203 ermitteln die zu erwartenden Latenzen jeweils anhand der Latenz-Erwartungswerte von stromaufwärts (von Listener zu Talker) entlang der Pfade vorhergehenden weiterleitenden Kommunikationsgeräten. Entsprechend Schritt 505 überprüfen die weiterleitenden Kommunikationsgeräte 101-104, 203 jeweils, ob die maximalen Latenzen lokal eingehalten werden. Bei Einhaltung der maximalen Latenzen übermitteln die weiterleitenden Kommunikationsgeräte 101-104, 203 jeweils eine Latenz-Bestätigung 432 stromaufwärts an die vorhergehenden weiterleitenden Kommunikationsgeräte. Die weiterleitenden Kommunikationsgeräte 101-104, 203 reservieren entsprechend Schritt 506 jeweils nur dann die Ressourcen für die Übertragung der Datenströme, wenn in jedem weiterleitenden Kommunikationsgerät 101-104, 203 entlang des jeweiligen Pfades eine Latenz-Bestätigung 423 von sämtlichen stromabwärts nachfolgenden weiterleitenden Kommunikationsgeräten vorliegt. Andernfalls erfolgt entsprechend Schritt 507 eine Abweisung der jeweiligen Reservierungsanfrage bzw. ein Widerruf einer bestehenden Reservierung.

Zur Überprüfung der Verfügbarkeit ausreichender Ressourcen ermitteln die weiterleitenden Kommunikationsgeräte die zu erwartenden Latenzen vorzugsweise einschließlich Latenzen, die durch andere Datenströme, die jeweils am selben Anschluss ausgeleitet werden, hervorgerufen werden. Bei Topologieänderungen bzw. neuen Reservierungsanfragen erfolgt vorteilhafterweise eine erneute Ermittlung der zu erwartenden Latenzen. Dabei werden bisherige Latenz-Bestätigungen widerrufen oder Warnungen signalisiert, falls nach Topologieänderungen bzw. neuen Reservierungsanfragen eine Überschreitung der maximalen Latenzen vorliegt. Darüber hinaus können die weiterleitenden Kommunikationsgeräte bei Topologieänderungen neue Pfade für die Datenströme ermitteln. Entsprechend einer vorteilhaften Ausgestaltung der vorliegenden Erfindung tauschen die weiterleitenden Kommunikationsgeräte zur Pfadermittlung untereinander Topologieinformationen aus, insbesondere entsprechend IS-IS-Protokoll (Intermediate System to Intermediate System).

## Patentansprüche

1. Verfahren zur Übermittlung zeitkritischer Daten innerhalb eines Kommunikationsnetzes, bei dem
- ausgewählte Datagramme (300) Datenströmen zugeordnet und von ersten Kommunikationsgeräten (203, 101) an zweite Kommunikationsgeräte (103-104) über zumindest die ersten und zweiten Kommunikationsgeräte umfassende Pfade übermittelt werden,
- an die ersten Kommunikationsgeräte angeschlossene Kommunikationsendgeräte (204-205) zur Reservierung von Ressourcen, die durch weiterleitende Kommunikationsgeräte (203, 101-104) entlang der Pfade für eine Übertragung der Datenströme bereitzustellen sind, jeweils maximale Latenzen umfassende Dienstgüteparameter (411-412) für die Datenströme spezifizieren,
- an die zweiten Kommunikationsgeräte angeschlossene Kommunikationsendgeräte (201-202) für eine Reservierungsanfrage jeweils einen Datenstrom-Identifikator (421-422) spezifizieren,
- die Dienstgüteparameter und/oder die Reservierungsanfragen jeweils durch das jeweilige Kommunikationsendgerät (201-202, 204-205) oder durch ein mit diesem verbundenes erstes oder zweites Kommunikationsgerät (203, 101, 103-104) an die weiterleitenden Kommunikationsgeräte übermittelt werden,
- die weiterleitenden Kommunikationsgeräte (203, 101-104) bei einer Reservierungsanfrage jeweils überprüfen, ob im jeweiligen Kommunikationsgerät ausreichende Ressourcen zur Datenübermittlung unter Einhaltung der spezifizierten Dienstgüteparameter verfügbar sind,
- die weiterleitenden Kommunikationsgeräte (203, 101-104) zur Überprüfung einer Verfügbarkeit ausreichender Ressourcen jeweils für Anschlüsse, die zur Ausleitung der Datenströme vorgesehen sind, zu erwartende Latenzen ermitteln und als Latenz-Erwartungswert (431) entlang der Pfade an nachfolgende weiterleitende Kommunikationsgeräte übermitteln,
- die weiterleitenden Kommunikationsgeräte (203, 101-104) die zu erwartenden Latenzen jeweils anhand der Latenz-Erwartungswerte (431) von entlang der Pfade vorhergehenden weiterleitenden Kommunikationsgeräten ermitteln und bei Einhaltung der maximalen Latenzen eine Latenz-Bestätigung (432) an die vorhergehenden weiterleitenden Kommunikationsgeräte übermitteln,
- die weiterleitenden Kommunikationsgeräte (203, 101-104) jeweils nur dann die Ressourcen für die Übertragung der Datenströme reservieren, wenn in jedem weiterleitenden Kommunikationsgerät entlang des jeweiligen Pfades eine Latenz-Bestätigung (432) vorliegt.

2. Verfahren nach Anspruch 1,
bei dem die weiterleitenden Kommunikationsgeräte zur Überprüfung der Verfügbarkeit ausreichender Ressourcen die zu erwartenden Latenzen einschließlich Latenzen ermitteln, die durch andere Datenströme, die jeweils am selben Anschluss ausgeleitet werden, hervorgerufen werden.

3. Verfahren nach einem der Ansprüche 1 oder 2,
bei dem bei Topologieänderungen und/oder neuen Reservierungsanfragen eine erneute Ermittlung der zu erwartenden Latenzen erfolgt und bei dem bei Überschreitung der maximalen Latenzen bisherige Latenz-Bestätigungen widerrufen oder Warnungen signalisiert werden.

4. Verfahren nach Anspruch 3,
bei dem die weiterleitenden Kommunikationsgeräte bei Topologieänderungen neue Pfade für die Datenströme ermitteln.

5. Verfahren nach einem der Ansprüche 1 bis 4,
bei dem die durch die Kommunikationsgeräte bereitzustellenden Ressourcen nutzbare Übertragungszeitfenster, Bandbreite, zugesicherte maximale Latenz, Queue-Anzahl, Queue-Cache und/oder Adress-Cache in Switches oder Bridges umfassen.

6. Verfahren nach einem der Ansprüche 1 bis 5,
bei dem die ersten Kommunikationsgeräte über ein Time-Sensitive Network, insbesondere entsprechend insbesondere entsprechend IEEE 802.1 Q und IEEE 802.1 Qbv, mit den zweiten Kommunikationsgeräten verbunden sind.

7. Verfahren nach Anspruch 6,
bei dem eine Weiterleitung der Datenströme mittels Frame Preemption, insbesondere gemäß IEEE 802.1Qbu, Time-Aware Shaper, insbesondere gemäß IEEE 802.1Qbv, Credit-Based Shaper, insbesondere gemäß IEEE 802.1Qav, Burst Limiting Shaper, Peristaltic Shaper und/oder Priority-Based Shaper gesteuert wird.

8. Verfahren nach einem der Ansprüche 1 bis 7,
bei dem die Datenströme auf Reservierungsanfragen jeweils bidirektional eingerichtet werden.

9. Verfahren nach einem der Ansprüche 1 bis 8,
bei dem bei ausreichenden Ressourcen jeweils eine dem spezifizierten Datenstrom-Identifikator zugeordnete Multicast-Adresse an ein anfragendes Kommunikationsendgerät oder an ein mit diesem verbundenes zweites Kommunikationsgerät übermittelt wird.

10. Verfahren nach einem der Ansprüche 1 bis 9,
bei dem die Reservierungsanfragen entsprechend IEEE 802.1Qcc behandelt werden.

11. Verfahren nach einem der Ansprüche 1 bis 10,
bei dem an die ersten Kommunikationsgeräte angeschlossenen Kommunikationsendgeräten jeweils eine Talker-Funktion zugeordnet ist und bei dem an die zweiten Kommunikationsgeräte angeschlossenen Kommunikationsendgeräten jeweils eine Listener-Funktion zugeordnet ist.

12. Verfahren nach Anspruch 11,
bei dem die an die ersten Kommunikationsgeräte angeschlossenen Kommunikationsendgeräte die Dienstgüteparameter für die Datenströme jeweils mittels einer Talker Advertise-Nachricht spezifizieren und bei dem die an die zweiten Kommunikationsgeräte angeschlossenen Kommunikationsendgeräte die Datenstrom-Identifikatoren jeweils mittels einer Listener Ready-Nachricht spezifizieren.

13. Verfahren nach einem der Ansprüche 1 bis 12,
bei dem die weiterleitenden Kommunikationsgeräte zur Pfadermittlung untereinander Topologieinformationen, insbesondere entsprechend IS-IS-Protokoll, austauschen.

14. Kommunikationsgerät zur Durchführung des Verfahrens nach einem der Ansprüche 1 bis 13 mit
- mehreren Anschlüssen zur Verbindung mit weiteren Kommunikationsgeräten,
- einem Koppelelement, durch das die Anschlüsse schaltbar miteinander verbindbar sind,
- wobei das Kommunikationsgerät dafür ausgestaltet und eingerichtet ist, ausgewählte Datagramme Datenströmen zuzuordnen und von ersten Kommunikationsgeräten an zweite Kommunikationsgeräte über zumindest die ersten und zweiten Kommunikationsgeräte umfassende Pfade zu übermitteln,
- durch an die ersten Kommunikationsgeräte angeschlossene Kommunikationsendgeräte zur Reservierung von Ressourcen für die Datenströme spezifizierte Dienstgüteparameter, die jeweils maximale Latenzen umfassen, und/oder durch an die zweiten Kommunikationsgeräte angeschlossene Kommunikationsendgeräte für Reservierungsanfragen spezifizierte Datenstrom-Identifikatoren an weiterleitende Kommunikationsgeräte entlang der Pfade für die Datenströme zu übermitteln,
- zu überprüfen, ob im Kommunikationsgerät ausreichende Ressourcen zur Datenübermittlung unter Einhaltung der spezifizierten Dienstgüteparameter verfügbar sind,
- zur Überprüfung einer Verfügbarkeit ausreichender Ressourcen jeweils für Anschlüsse, die zur Ausleitung der Datenströme vorgesehen sind, zu erwartende Latenzen zu ermitteln und als Latenz-Erwartungswert entlang der Pfade an nachfolgende weiterleitende Kommunikationsgeräte zu übermitteln,
- die zu erwartenden Latenzen jeweils anhand der Latenz-Erwartungswerte von entlang der Pfade vorhergehenden weiterleitenden Kommunikationsgeräten zu ermitteln und bei Einhaltung der maximalen Latenzen eine Latenz-Bestätigung an die vorhergehenden weiterleitenden Kommunikationsgeräte zu übermitteln,
- nur dann die Ressourcen für die Übertragung der Datenströme zu reservieren, wenn in jedem weiterleitenden Kommunikationsgerät entlang des jeweiligen Pfades eine Latenz-Bestätigung vorliegt.
